# EUROPEAN PATENT APPLICATION

(11) **EP 1 726 939 A2**
(43) Date of publication of application: **29.11.2006**
(21) Application number: 06010414.8
(22) Date of filing: 19.05.2006
(51) Int. Cl.: G01N 21/31, G01N 33/543

(54) **Molecular interaction detector and molecule recovery device using the same**

(30) Priority: 23.05.2005 JP 2005148887
(71) Applicant: HITACHI, LTD., Chiyoda-ku Tokyo 100-8280 (JP)
(72) Inventor: Hakari, Mami, Tokyo 100-8220 (JP); Miyamoto, Tetsuro, Tokyo 100-8220 (JP); Togashi, Shigenori, Tokyo 100-8220 (JP)
(74) Representative: Strehl Schübel-Hopf & Partner

(57) **Abstract**

In a molecular interaction detector, a noble-metal free-electron thin film is formed on a substrate. Styrene-made nanoparticles are adsorbed onto the thin film surface. Another noble-metal free-electron thin film is formed on upper-half surfaces of the nanoparticles and is modified by an organic linker molecule. The organic linker molecule has a linear or branched chemical structure including a functional group capable of being fixed to the surface of the noble-metal free-electron thin film with a linear chain made of 1 to 5 atoms. A detergent is used in a mobile phase. Deposition of materials having no relation with the measurement onto a sensor can be avoided in the molecular interaction detector.

## Description

### BACKGROUND OF THE INVENTION

### 1. Field of the Invention

The present invention relates to a molecular interaction detector and a molecule recovery device using the detector. More particularly, the present invention relates to a molecular interaction detector suitable for use in medical diagnosis, food inspection, etc., and to a molecule recovery device using the detector.

### 2. Description of the Related Art

Patent Document 1 (Japanese Patent No. 2815120) discloses one example of known detectors for detecting the molecular interaction. In the disclosed molecular interaction detector, the molecular interaction is measured by using a sensor that utilizes a resonance phenomenon of surface plasmon, i.e., a compression wave of free electrons propagating along an interface between a metal thin film and a dielectric. To fix a ligand to a sensor surface, alkane thiol is adsorbed onto a gold thin film by self-assembly. On that occasion, the alkane thiol having an active group to be covalently bound to a bioadaptable matrix is given as an organic linker molecule which contains a functional group capable of being bound to a metal and has the chain length with the number of atoms of not less than 10. The alkane thiol is coated with the bioadaptable porous matrix.

Patent Document 2 (JP,A 2000-55920) discloses another example of known detectors for detecting the molecular interaction. In the disclosed molecular interaction detector, a substrate is divided into a plurality of regions, and on the substrate, polystyrene nanoparticles modified by different biomolecules are adsorbed in the form of a monolayer in each of the divided regions. An analyte (detection target) in a sample is colored by a fluorochrome, and protein specifically bound to the analyte is adsorbed onto the polystyrene nanoparticles. Excitation light is irradiated to the fluorochrome and an excited fluorescence signal is detected.

Patent Document 3 (JP,A 2002-365210) discloses still another example of known detectors for detecting the molecular interaction. In the disclosed molecular interaction detector, to simply measure the biomolecular binding in a liquid, light is irradiated in a particular direction to a substrate onto which noble metal nanoparticles are adsorbed, and the absorption wavelength of the reflected light is measured. On that occasion, the surfaces of the noble metal nanoparticles are modified by thiol molecules each having a functional group so that any antibody having an amino group can be bound to the thiol molecule.

### SUMMARY OF THE INVENTION

In the detector disclosed in Patent Document 1, because the gold thin film is used as the metal thin film, thiol and sulfides are adsorbed onto gold by self-assembly. However, the inventors have found the following disadvantage. Since the alkane thiol, etc. having the chain length with the number of atoms of not less than 10 is employed, as the organic linker molecule, in the noble-metal nanoparticle sensor, there is a fear that when a buffer solution is added, the absorbance maximum wavelength (peak wavelength) is shifted and the reaction to be measured cannot be precisely measured.

In the detector disclosed in Patent Document 2, because of using a noble-metal nanoparticle sensor for the measurement, there is a fear that protein, etc. capable of being physically adsorbed onto the noble metal surface are adsorbed onto a sensor chip, and materials having no relation with the reaction to be measured are non-specifically adsorbed onto the sensor chip. This impedes precise measurement. Further, in the biomolecule detecting method disclosed in Patent Document 3, because an insulator spacer layer is used when the metal nanoparticles are adsorbed onto the metal substrate, a complicated process is required to manufacture the noble-metal nanoparticle sensor.

In view of the above-mentioned problems in the related art, an object of the present invention is to increase measurement accuracy in a molecular interaction detector. Another object of the present invention is to reduce deposition of materials having no relation with the measurement onto a sensor in a molecular interaction detector.

To achieve the above objects, the present invention provides a molecular interaction detector for detecting molecular interactions by using a noble-metal free-electron thin film, wherein the noble-metal free-electron thin film is modified by an organic linker molecule, and the organic linker molecule has a linear or branched chemical structure having a functional group capable of being fixed to a surface of the noble-metal free-electron thin film and including a linear chain made of 1 to 5 atoms. The organic linker molecule also includes a functional group capable of being bound to a particular analyte contained in a sample solution to be measured.

In the above molecular interaction detector, preferably, the detector comprises a light source for emitting light, and a unit for detecting the light emitted from the light source and reflected by the noble-metal free-electron thin film. Further, the noble-metal free-electron thin film has concaves and convexes formed in a film surface and having a size of not larger than a wavelength of the light source. Preferably, a detergent is added to the sample solution to be measured.

In the above molecular interaction detector, preferably, the detector comprises a substrate on which the noble-metal free-electron thin film is formed, and a large number of nanoparticles adsorbed in the form of a single layer onto the substrate and having an essentially one diameter in the range of 5 nm to 100 µm. Further, each of the nanoparticles is made of an insulating high polymer selected from among at least polystyrene, styrene/butadiene, polyvinyltoluene, styrene/divinylbenzene, and vinyltoluene/tert-butylstyrene, or it is made of an insulating non-metal material selected from among at least silicon, silicon oxide, gallium arsenide, and glass. Moreover, a noble-metal free-electron thin film is formed on surfaces of the nanoparticles on the side opposed to the side where the nanoparticles are adsorbed onto the substrate.

In the above molecular interaction detector, preferably, the functional group of the organic linker molecule capable of being bound to the particular analyte contained in the sample solution to be measured is one selected from among hydroxyl, carboxyl, amino, aldehyde, carbonyl, epoxy, and vinyl groups.

To achieve the above object, the present invention also provides a molecular recovery device comprising the above molecular interaction detector and one of an ultrasonic wave generating unit and a laser beam generating unit. In the molecular recovery device, preferably, the device further comprises a mass spectrometer for measuring a substance separated from a noble-metal free-electron thin film when one of an ultrasonic wave generated from the ultrasonic wave generating unit and a pulsated laser beam generated from the laser beam generating unit is irradiated to the molecular interaction detector.

According to the present invention, since the molecular interaction is detected by using a sensor having a coated noble-metal free-electron thin film which is modified by alkane thiol having a chain length with the number of atoms of not more than 5, a signal not taking part in the reaction to be measured can be suppressed. As a result, measurement accuracy is increased. In addition, with the use of a detergent, a substance not taking part in the reaction to be measured can be suppressed from being deposited on a sensor chip.

### BRIEF DESCRIPTION OF THE DRAWINGS

Fig. 1 is a schematic view showing one example of a molecular interaction detector according to the present invention;
Fig. 2 is a front view of a noble-metal nanoparticle sensor used in the molecular interaction detector shown in Fig. 1;
Figs. 3A and 3B are each a graph showing an example of detection by the noble-metal nanoparticle sensor;
Fig. 4 is a graph showing an example of spectroscopic measurement by the noble-metal nanoparticle sensor;
Fig. 5 is a graph showing an example of spectroscopic measurement by the noble-metal nanoparticle sensor;
Fig. 6 is an explanatory view for explaining one method of measuring adsorption of protein;
Fig. 7 is a graph showing an example of spectroscopic measurement by the noble-metal nanoparticle sensor;
Fig. 8 is a graph showing an example of spectroscopic measurement by the noble-metal nanoparticle sensor;
Fig. 9 is an explanatory view for explaining another method of measuring adsorption of protein;
Fig. 10 is a graph showing an example of spectroscopic measurement by the noble-metal nanoparticle sensor;
Fig. 11 is a graph showing an example of spectroscopic measurement by the noble-metal nanoparticle sensor;
Fig. 12 is a graph showing an example of spectroscopic measurement by the noble-metal nanoparticle sensor; and
Fig. 13 is an explanatory view for explaining a method of stripping, from a substrate, gold nanoparticles including adsorbed protein.

### DESCRIPTION OF THE PREFERRED EMBODIMENTS

Several examples of a molecular interaction detector according to the present invention will be described below as preferred embodiments with reference to the drawings.

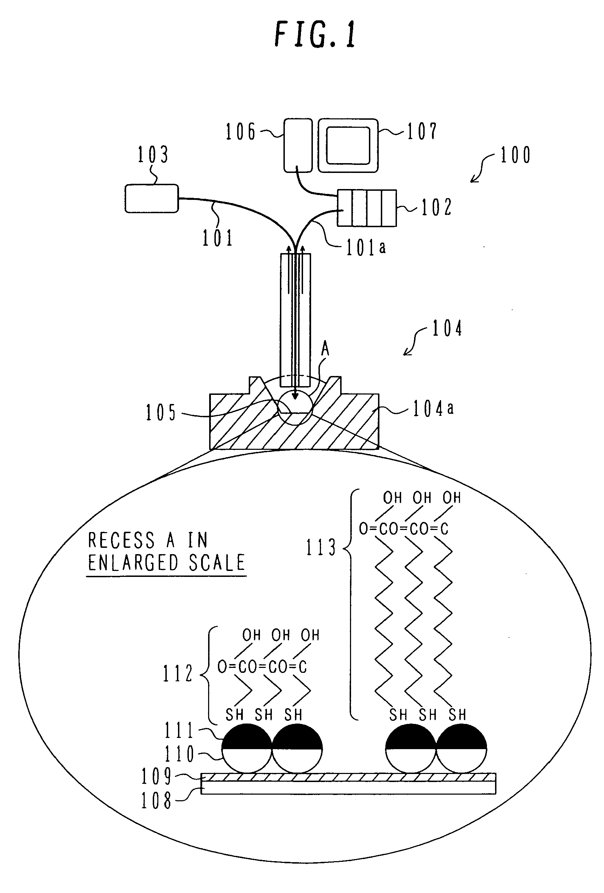

Fig. 1 is a schematic view showing one example of a molecular interaction detector 100 according to the present invention. In this example, as described later in detail, a noble-metal nanoparticle sensor 104 is employed which contains a detergent in the mobile phase and is modified by alkane thiol having the chain length with the number of atoms of not more than 5. An analyte (target to be measured) is a biomolecule.

The molecular interaction detector 100 includes the noble-metal nanoparticle sensor 104 as a sensor for detecting molecular interactions. A sensor chip 104a of the noble-metal nanoparticle sensor 104 has a recess A formed at its center. The bottom of the recess A is formed to be a flat surface. Opposite lateral surfaces of the recess A are sloped. Light emitted from a light source 103 is irradiated to the recess A through an optical multi-fiber probe 101. The optical multi-fiber probe 101 is branched at an intermediate position between one end facing the light source 103 and the other end from which the light is irradiated toward the sensor chip 104a. A branched fiber tip 101a is connected to a spectrophotometer 102. The spectrophotometer 102 is connected to a data processing unit 107 through an A/D converter 106.

The recess A of the noble-metal nanoparticle sensor 104 is shown in enlarged scale in the lower side of Fig. 1. In the noble-metal nanoparticle sensor 104, a noble-metal thin film 109 is coated over the surface of a flat substrate 108 by vapor deposition. A monolayer of substantially spherical nanoparticles 110 is formed in planar arrangement and is adsorbed onto the noble-metal thin film 109. Another noble-metal thin film 111 is formed on the upper surfaces of the nanoparticles 110 by vapor deposition.

In the noble-metal nanoparticle sensor 104, 1 µM to 10 mM of sodium thioglycolate 112 dissolved in water is permeated into the noble-metal thin film 111 such that the thioglycolate 112 is adsorbed onto the noble-metal thin film 111. Also, 1 µM to 10 mM of 10-carboxy-1-decanethiol 113 dissolved in 10% (v/v) of ethanol is permeated into the noble-metal thin film 111 such that the 10-carboxy-1-decanethiol 113 is adsorbed onto the noble-metal thin film 111. The thioglycolate 112 and the 10-carboxy-1-decanethiol 113 contain carboxyl groups as functional groups.

In the molecular interaction detector 100 constructed as described above, the light emitted from the light source 103 passes through the optical multi-fiber probe 101 and is irradiated to a noble-metal nanoparticle sensor surface 105 of the sensor chip 104a. A part of the reflected light from the noble-metal nanoparticle sensor surface 105 is returned through the optical multi-fiber probe 101 and enters the spectrophotometer 102. The spectrophotometer 102 measures an absorption wavelength characteristic based on the reflected light from the noble-metal nanoparticle sensor surface 105. The measured result is sent to the data processing unit 107 through the A/D converter 106 and is stored therein.

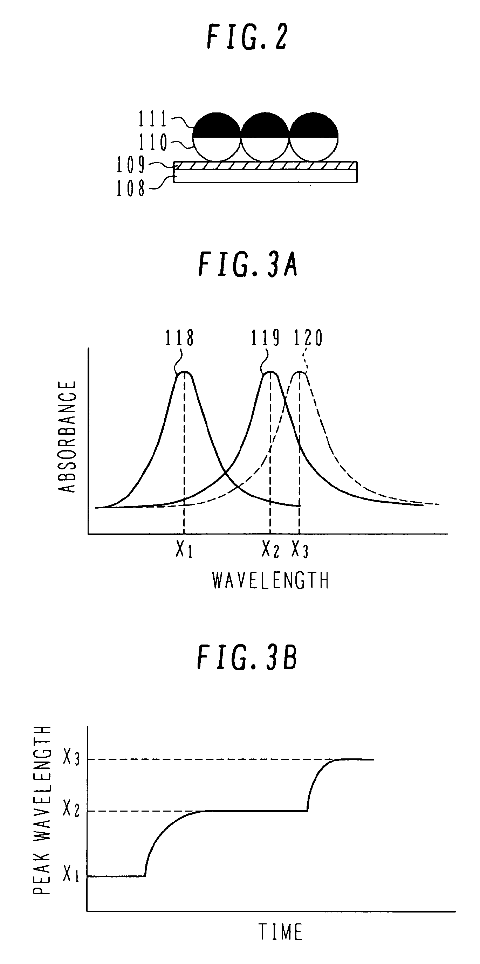

Details of the noble-metal nanoparticle sensor 104 will be described below with reference to Fig. 2. After coating the noble-metal thin film 109 over the surface of the substrate 108, a monolayer of the nanoparticles 110 made of a high polymer, SiO₂, TiO₂ or the like is adsorbed onto the noble-metal thin film 109. Then, a noble metal, e.g., gold, silver, copper or platinum, is vapor-deposited or sputtered to form the noble-metal thin film 111 on the nanoparticles 110. Because the surfaces of the substrate 108 and the nanoparticles 110 are coated with the noble metals, the substrate 108 and the nanoparticles 110 noticeably develop colors.

An example of measuring the biomolecular interaction by using the noble-metal nanoparticle sensor 104 will be described below in connection with the case of detecting an antigen - antibody reaction. Figs. 3A and 3B are graphs for explaining the principle in measurement of the biomolecular interaction by using the spectrophotometer 102. Fig. 3A is a graph showing absorption wavelength characteristics, and Fig. 3B is a graph showing change of peaks of the absorption wavelength characteristics over time, which are detected as shown in Fig. 3A.

The spectrophotometer 102 detects the reflected light from the recess A in the noble-metal nanoparticle sensor 104 and measures the absorbed light intensity per wavelength. For example, when a solution of 1 µM to 10 mM of the sodium thioglycolate 112 is supplied to the recess A, an absorption wavelength characteristic 118 is obtained. A peak wavelength of the absorption wavelength characteristic 118 is x₁. Next, when another solution, e.g., a buffer solution containing antigen protein, is added to the solution of the sodium thioglycolate 112, an absorption wavelength characteristic 119 is obtained and its peak wavelength (x₂) is shifted toward the longer wavelength side. Subsequently, when still another solution, e.g., a buffer solution containing antibody protein that is specifically bound to the antigen protein to be detected, is added, an absorption wavelength characteristic 120 is obtained and its peak wavelength (x₃) is further shifted toward the longer wavelength side.

In the measurement process described above, the peak wavelength (absorption maximum wavelength) is changed as shown in Fig. 3B. More specifically, the peak wavelength is first changed from the peak wavelength x₁ obtained when only the solution of the sodium thioglycolate is added, to the peak wavelength x₂ obtained when the other solution, e.g., the buffer solution containing antigen protein, is added, with the lapse of a predetermined time. The amount of the fixed antigen protein can be measured from the extent by which the peak wavelength has shifted. Then, when the buffer solution containing antibody protein specifically bound to the antigen protein to be detected is added, the peak wavelength is further shifted to x₃ with the lapse of a predetermined time. The amount of the specifically bound antigen protein can be obtained by measuring the extent by which the peak wavelength has shifted from x₂ to x₃.

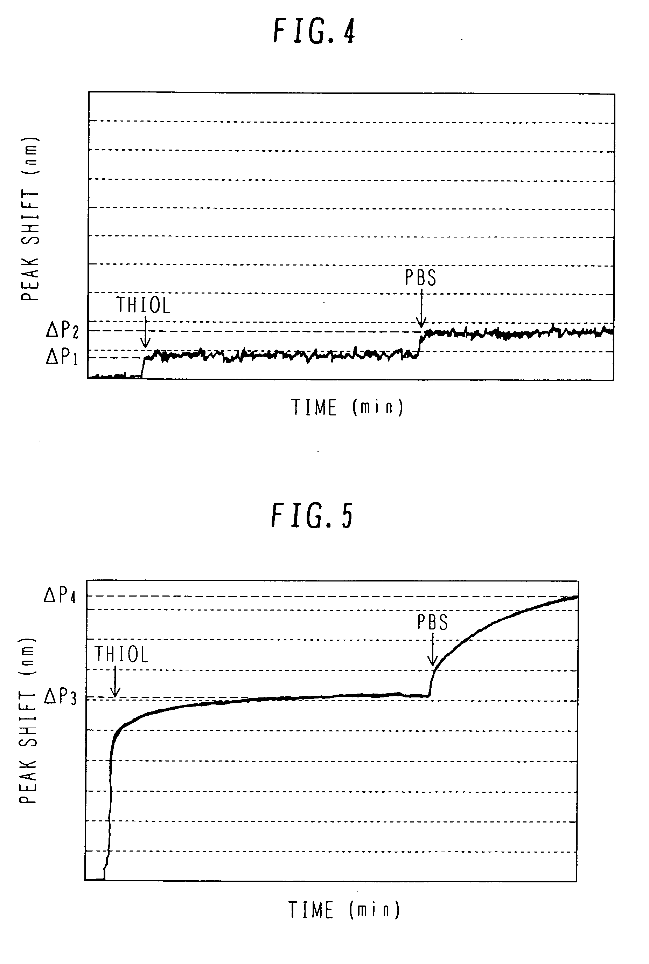

Practical examples of the measurement using the spectrophotometer 102 will be described below with reference to Fig. 4 and 5. The measurement is performed under the conditions shown in Fig. 1. More specifically, in the noble-metal nanoparticle sensor 104, the gold thin film 109 is coated over the flat substrate 108 by vapor deposition. Further, the gold thin film 111 is coated over the nanoparticles 110 by vapor deposition. The thioglycolate 112 and the 10-carboxy-1-decanethiol 113 are separately adsorbed onto different regions of the gold thin film 111 on the nanoparticles 110.

Fig. 4 shows an experimental result for change of the shift amount (Δx) of the peak wavelength corresponding to Fig. 3B. When the sodium thioglycolate (thiol) 112 was adsorbed onto the nanoparticles 110, the peak of absorption spectrum measured by the spectrophotometer 102 was shifted by ΔP₁ as shown in Fig. 4. Then, a solution of PBS (Phosphate Buffered Saline) (i.e., 10 mM of Phosphate and 150 mM of NaCl) at pH 7.4 was added to the recess A. As a result of measuring the reflected light from the nanoparticles 110 through the optical multi-fiber probe 101, the peak wavelength was further shifted by ΔP₂.

Fig. 5 shows an experimental result when the 10-carboxy-1-decanethiol 113 was adsorbed onto the nanoparticles 110. The peak wavelength was shifted by ΔP₃. Then, as in the case of using the thioglycolate, the solution of PBS (i.e., 10 mM of Phosphate and 150 mM of NaCl) at pH 7.4 was added to the recess A. As a result of measuring the reflected light from the recess A by the spectrophotometer 102, the peak wavelength was further shifted by ΔP₄.

According to this example of the present invention, since the sodium thioglycolate is used as an organic thiol molecule, it is possible to suppress a non-specific signal due to the buffer solution (BPS), which is measured in the case of using the 10-carboxy-1-decanethiol. Also, various kinds of proteins can be fixed to the noble-metal nanoparticle sensor by selecting functional groups, such as hydroxyl, carboxyl, amino, aldehyde, carbonyl, epoxy, and vinyl groups, contained in the organic linker molecule depending on the kind of protein to be captured.

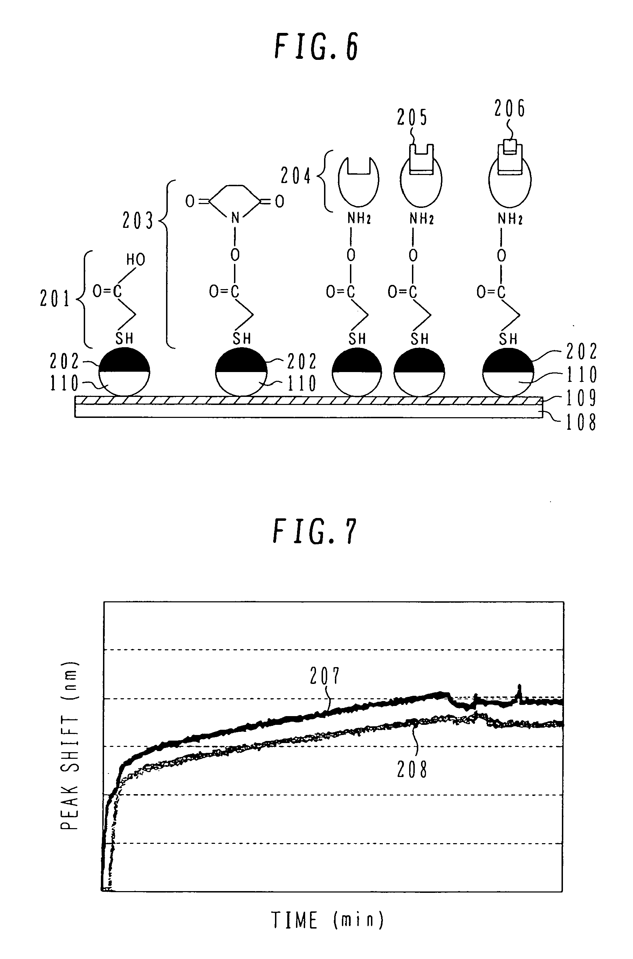

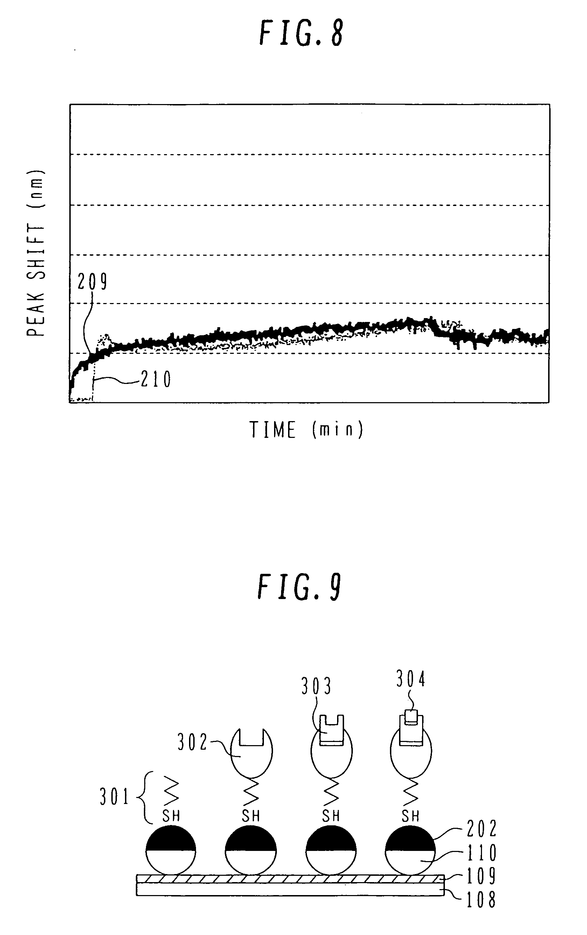

Another example of the molecular interaction detector 100 according to the present invention will be described below with reference to Figs. 6-8. Fig. 6 shows the adsorbed state of alkane thiol, and Figs. 7 and 8 are each a graph showing peak shift characteristics of the reflected light measured by the spectrophotometer 102. This example differs from the above-described example only in alkane thiol adsorbed onto a gold thin film 202. An aqueous solution of 1 µM to 10 mM of sodium thioglycolate 201 is supplied to the nanoparticles 110 on which the gold thin film 202 is formed by vapor deposition. A molecular monolayer of the thioglycolate 201 is thereby formed on the gold thin film 202.

Then, a solution of 0.2 M of WSC/0.05 M of NHS is added. Here, WSC means N-ethyl-N'-(3 dimethylaminopropyl)-carbodiimide hydrochloride, and NHS means N-hydroxy succimide. This WSC/NHS solution is an aqueous solution obtained by dissolving them in an extra-pure water (MiLiQ). The nanoparticles 110 coated with the gold thin film 202 is immersed in the WSC/NHS solution for 7 minutes to activate a carboxyl group 203. Streptoavidin 204 is added to the activated carboxyl group 203 such that an amino group of the streptoavidin 204 is coupled to the carboxyl group 203. The streptoavidin 204 is dissolved in 10 mM of acetic acid buffer at pH 4.5 and is used in concentration of 100 µg/mL.

A solution of 50 mM of Tris-HCl (pH 7.5) and 0.15 M of NaCl is used as the mobile phase. Biotinylated second protein 205 specifically bound to first protein 206 is added as a sample. The biotinylated second protein 205 is captured by the streptoavidin 204. Further, a detergent Tween 20 (registered trade name) is added to the mobile phase in final concentration of 0.1%.

Each of data 207 and 209 indicated by dark lines in Figs. 7 and 8 represents the peak wavelength resulting when the first protein 206 is added after capturing the biotinylated second protein 205. Each of data 208 and 210 indicated by light lines in Figs. 7 and 8 represents the peak wavelength resulting when the first protein 206 is added without capturing the biotinylated second protein 205.

When the first protein 206 is added to the solution to which is added the biotinylated second protein 205, the first protein 206 is captured by the biotinylated second protein 205 in a way like hybridization. For comparison, an experiment of adding 1 µM of the first protein 206 alone without adding the biotinylated second protein 205 was also conducted (see the data 208). The result of measuring an absorption spectrum by the spectrophotometer 102 with the first protein 206 adsorbed onto the second protein 205 is shown by the data 207 in Fig. 7. Note that Fig. 7 plots a peak shift, i.e., a shift of the absorption maximum wavelength.

As a comparative experiment, the streptoavidin 204 was adsorbed onto the nanoparticles 110 coated with gold by vapor deposition without using not only the organic linker molecule, i.e., the linker molecule such as the thioglycolate, but also the detergent. Then, the first protein 206 was adsorbed onto the biotinylated second protein 205. The result of measuring an absorption spectrum by the spectrophotometer 102 in that case is shown by the data 209 in Fig. 8. The result in the case of adsorbing the first protein 206 without capturing the second protein 205 is also shown in Fig. 8 (see the data 210). As seen from Figs. 7 and 8, according to this example, non-specific adsorption caused in the case of not capturing the biotinylated second protein 205 can be suppressed by adding the detergent to the mobile phase and by using the thioglycolate as the organic linker molecule.

Still another example of the molecular interaction detector 100 according to the present invention will be described below with reference to Figs. 9-12. This example differs from the above-described examples in alkane thiol adsorbed. With reference to Fig. 9, the following description is made of a method of measuring the amount of adsorbed protein when first protein and biotinylated second protein specifically bound to the first protein are adsorbed onto the nanoparticles 110 coated with the gold thin film 202 by vapor deposition. A suspended aqueous solution of 1 µM to 10 mM of sodium thioglycolate or aminoethane thiol is supplied to the recess A. A monolayer of organic thiol molecules 301 of the thioglycolate or the aminoethane thiol is thereby formed on the surface of the vapor-deposited gold thin film 202 coated over the nanoparticles 110.

Then, 10 - 1000 mg/mL of streptoavidin 302 is added to the suspended aqueous solution such that the streptoavidin 302 is bound to the thioglycolate or the aminoethane thiol. Further, biotinylated second protein 303 specifically bound to first protein 304 is added. The biotinylated second protein 303 is captured by the streptoavidin 302. A detergent Tween 20 (registered trade name) is added in final concentration of 0.1% to the mobile phase that is a solution of 50 mM of Tris-HCl (pH 7.5) and 0.15 M of NaCl.

When the first protein 304 specifically bound to the biotinylated second protein 303 is supplied to the sensor, the first protein 304 is captured by the biotinylated second protein 303 in a way like hybridization. For comparison, an experiment of capturing, to the streptoavidin 302, biotinylated variant second protein having no molecular configuration capable of being bound to the first protein 304 was also conducted. Also in that experiment, sodium thioglycolate or aminoethane thiol was used as the organic thiol molecule 301.

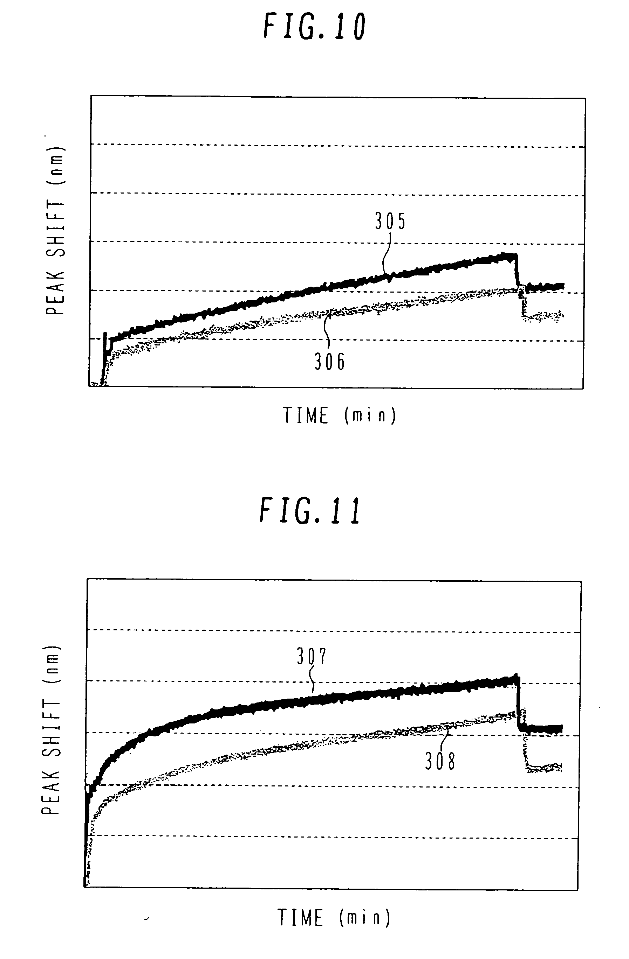

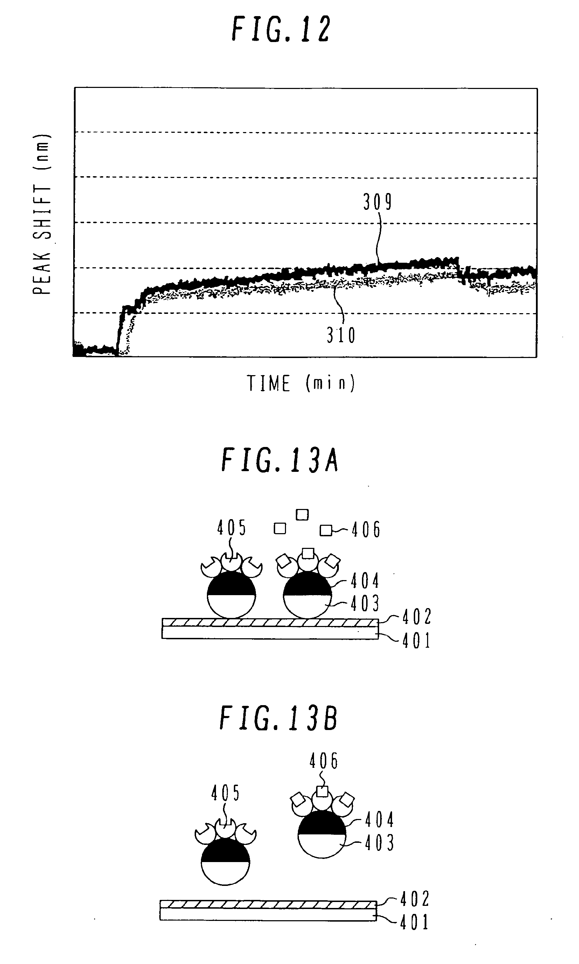

Fig. 10 shows the result of measuring adsorption of the first protein 304 by the spectrophotometer 102 when the thioglycolate is used as the organic thiol molecule. Note that Fig. 10 is a graph showing a peak shift of the absorption spectrum. Further, Fig. 11 shows the result of measuring a peak shift of the absorption spectrum caused with adsorption of the first protein 304 when the aminoethane thiol is used as the organic thiol molecule, and Fig. 12 shows the result of measuring a peak shift of the absorption spectrum caused with adsorption of the first protein 304 when the organic thiol molecule is not used.

In those graphs, each of data 305, 307 and 309 indicated by dark lines represents the peak wavelength resulting when the first protein 304 specifically bound to the biotinylated second protein 303 is added after capturing the biotinylated second protein 303. Each of data 306, 308 and 310 indicated by light lines represents the peak wavelength resulting when the first protein 304 is added after capturing the biotinylated variant second protein having no configuration capable of being bound to the first protein 304.

As seen from Figs. 10-12, according to this example, non-specific adsorption caused in the case of capturing the biotinylated variant second protein 303, which has no molecular configuration capable of being bound to the first protein 304, can be suppressed by adding the detergent to the mobile phase and using the thioglycolate or the aminoethane thiol as the organic thiol molecule.

Other example of a molecule interaction detector according to the present invention will be described below with reference to Figs. 13A and 13B which show the recess A in enlarged scale. In a noble-metal nanoparticle sensor 104, as in the example shown in Fig. 1, a noble-metal thin film 402 is coated over a substrate 401. A monolayer of nanoparticles 403 made of a high polymer, SiO₂, TiO₂ or the like is formed on the noble-metal thin film 402 coated over the substrate 401. Then, a noble metal, e.g., gold, silver, copper or platinum, is vapor-deposited or sputtered from above the nanoparticles 403, to thereby form a noble-metal thin film 404 on the upper surfaces of the nanoparticles 403. Because the surfaces of the substrate 401 is coated with the noble-metal thin film 402, the substrate 401 and the nanoparticles 403 noticeably develop colors.

Second protein 405 is physically adsorbed onto the nanoparticles 403 coated with the noble-metal thin film 404. Then, a sample containing first protein 406 specifically bound to the second protein 405 is supplied to the recess A. As shown in Fig. 13A, the first protein 406 is captured on the surfaces of the nanoparticles 403. An ultrasonic wave with transmission frequency of 50 kHz and output of 10 W is irradiated toward the substrate 401 in water for 5 seconds. As shown in Fig. 13B, the nanoparticles 403 are stripped from the substrate 401 with the irradiation of the ultrasonic wave. The nanoparticles 403 stripped from the substrate 401 with the first protein 406 adsorbed on them are recovered by using a filter (not shown). The recovered nanoparticles 403 are treated with a buffer solution of 10 mM of glycine - hydrochloric acid at pH 3 for elution of the first protein 406. The eluted first protein 406 is analyzed by, e.g., a mass spectrometer (not shown). According to this example, it is possible to recover protein and to reliably confirm the recovery of the protein.

## Claims

1. A molecular interaction detector for detecting molecular interactions by using a noble-metal free-electron thin film,
wherein said noble-metal free-electron thin film is modified by an organic linker molecule, and
said organic linker molecule has a linear or branched chemical structure including a functional group capable of having fixed to a surface of said noble-metal free-electron thin film and including a linear chain made of 1 to 5 atoms.

2. The molecular interaction detector according to Claim 1, wherein said detector comprises a light source for emitting light, and means for detecting the light emitted from said light source and reflected by said noble-metal free-electron thin film, and
wherein said noble-metal free-electron thin film has concaves and convexes formed in a film surface and having a size of not larger than a wavelength of said light source.

3. The molecular interaction detector according to Claim 1, wherein said detector comprises a substrate on which said noble-metal free-electron thin film is formed, and a large number of nanoparticles adsorbed in the form of a monolayer onto said substrate and having an essentially one diameter in the range of 5 nm to 100 µm, and
wherein each of said nanoparticles is made of an insulating high polymer selected from among at least polystyrene, styrene/butadiene, polyvinyltoluene, styrene/divinylbenzene, and vinyltoluene/tert-butylstyrene, and a noble-metal free-electron thin film is formed on surfaces of said nanoparticles on the side opposed to the side where said nanoparticles are adsorbed onto said substrate.

4. The molecular interaction detector according to Claim 1, wherein said detector comprises a substrate on which said noble-metal free-electron thin film is formed, and a large number of nanoparticles adsorbed in the form of a monolayer onto said substrate and having an essentially one diameter in the range of 5 nm to 100 µm, and
wherein each of said nanoparticles is made of an insulating non-metal material selected from among at least silicon, silicon oxide, gallium arsenide, and glass, and a noble-metal free-electron thin film is formed on surfaces of said nanoparticles on the side opposed to the side where said nanoparticles are adsorbed onto said substrate.

5. The molecular interaction detector according to Claim 1, wherein a detergent is added to a sample solution to be measured.

6. The molecular interaction detector according to Claim 1, wherein a functional group of said organic linker molecule capable of being bound to a particular analyte contained in a sample solution to be measured is one selected from among hydroxyl, carboxyl, amino, aldehyde, carbonyl, epoxy, and vinyl groups.

7. A molecular recovery device comprising the molecular interaction detector according to Claim 1 and one of ultrasonic wave generating means and laser beam generating means.

8. The molecular recovery device according to Claim 7, further comprising a mass spectrometer for measuring a substance separated from a noble-metal free-electron thin film when one of an ultrasonic wave generated from said ultrasonic wave generating means and a pulsated laser beam generated from said laser beam generating means is irradiated to said molecular interaction detector.
